# EUROPÄISCHE PATENTANMELDUNG

(11) **EP 2 386 697 A2**
(43) Veröffentlichungstag der Anmeldung: **16.11.2011**
(21) Anmeldenummer: 11003840.3
(22) Anmeldetag: 10.05.2011
(51) Int. Cl.: E04C 2/20, B32B 5/18, B32B 5/20, B32B 5/32

(54) **Wärmedämmplatten, Wärmedämmsysteme enthaltend diese Wärmedämmplatten und Verfahren zur Herstellung solcher Wärmedämmplatten**

(30) Priorität: 10.05.2010 DE 102010020021
(71) Anmelder: Lohmann, Thomas, 68526 Ladenburg (DE); Tholke, Wolfgang, 26188 Edewechl (DE)
(72) Erfinder: Lohmann, Thomas, 68526 Ladenburg (DE); Thölke, Wolfgang, 26188 Edewecht (DE)
(74) Vertreter: Metten, Karl-Heinz

(57) **Zusammenfassung**

Die Erfindung betrifft Wärmedämmplatten (10), enthaltend eine erste Dämmschicht (16) mit einer ersten durchschnittlichen Dicke (d1), eine zweite Dämmschicht (18) mit einer zweiten durchschnittlichen Dicke (d2), und mindestens eine Wärmespeicherschicht (20) mit einer dritten durchschnittlichen Dicke (d3), die zwischen der ersten und der zweiten Dämmschicht (16,18) vorliegt, enthaltend mindestens ein latentwärmespeicherndes Material und/oder mindestens ein Funktions- bzw. Speichermaterial (22) mit einer spezifischen Wärmekapazität, die größer ist als die spezifische Wärmekapazität der ersten Dämmschicht (16) und der zweiten Dämmschicht (18), wobei die durchschnittliche erste Dicke (d1) größer ist als die durchschnittliche zweite Dicke (d2), wobei die Wärmeleitfähigkeit der ersten und zweiten Dämmschicht (16,18) kleiner 0,045 W/(m x K), insbesondere kleiner oder gleich 0,035 W/(m x K), ist und wobei die Dichte der ersten und zweiten Dämmschicht (16,18) kleiner 0,3 g/cm³ ist, insbesondere im Bereich von 0,01 bis 0,3 g/cm³ liegt. Ferner betrifft die Erfindung ein Dämmsystem enthaltend die erfindungsgemäße Wärmedämmplatte (10) sowie Verfahren zur Herstellung der erfindungsgemäßen Wärmedämmplatte (10).

## Beschreibung

Die vorliegende Erfindung betrifft Wärmedämmplatten, Wärmedämmsysteme enthaltend diese Wärmedämmplatten und Verfahren zur Herstellung solcher Wärmedämmplatten.

Seit mehreren Jahrzehnten sind Wärmedämm-Verbundsysteme eine Standardmaßnahme zur Verringerung des Wärmeverlustes von Fassaden im Neu- und Altbaubereich. Durch die Forderungen der Politik und Öffentlichkeit sind die Anforderungen an solche Systeme, auch unter Beachtung der aktuellen Energieeinsparverordnung (EnEV), im großen Maße orientiert an größeren Dämmdicken sowie dem daraus resultierenden Einsparpotential und der Reduzierung klimaschädlicher CO₂-Emissionen.

Neben der gewünschten höheren Energieeinsparung gehen weitere bauphysikalische Effekte mit diesen Maßnahmen einher. So erreicht immer weniger Wärmeenergie aus dem Inneren eines Gebäudes die wetterseitige Dämmebene. Diese ist in der Heizperiode kälter als bei Gebäuden mit älteren Wärmedämm-Verbundsystemen. Im Herbst und im Frühjahr kommt es an den kalten Flächen zur vermehrten Kondensation von Luftfeuchtigkeit. Da diese Feuchtigkeit bei heute gängigen Dämmdicken eine immer längere Verweilzeit auf den Flächen aufweist, sind die Voraussetzungen für mikrobiellen Bewuchs gegeben. Es kommt zur Veralgung der Fassade.

Eine Maßnahme zur Vermeidung der Veralgung besteht in der Erhöhung der Oberflächentemperatur zu den kritischen Tageszeiten. Dazu eignen sich z. B. latentwärmespeichernde Stoffe, die sich zwischen Dämmplatte und Putz oder im Putz selbst befinden.

DE 102 12 580 A1 nennt als weitere Möglichkeit die Integration des Latentwärmespeichers in der Dämmplatte selbst. Ziel dieser Maßnahmen ist die Speicherung von Wärmeenergie, die während der wärmeren Tageszeit in den Putz und den latentwärmespeichernden Stoff eindringen kann. Durch eine langsame Abgabe dieser tagsüber aufgenommenen Energie ist die Oberflächentemperatur zu den Tageszeiten mit ansonsten vermehrter Kondensatbildung so hoch, dass diese praktisch unterbleibt.

Es versteht sich im Sinne dieser Maßnahmen, dass statt eines latentwärmespeichernden Stoffes auch Stoffe mit hoher Wärmekapazität einen ähnlichen Effekt erzielen. Weil Latentwärmespeicher nur in einem sehr begrenzten Temperaturbereich wirken, ist die Beschränkung auf Stoffe mit hoher Wärmekapazität je nach Klimaregion vorteilhaft.

Die bevorzugte Ausführung der oben beschriebenen Maßnahmen ist die Integration von latentwärmespeichernden Stoffen im Putz. Leider lassen sich diese Substanzen häufig nur verkapselt in Form sehr kleiner Kugeln in Putzsystemen nutzen, weil sie den mechanischen Belastungen bei der Verarbeitung sonst nicht standhalten. In einem Putz sind diese Kugeln nur in begrenzter Menge einsetzbar, was die Wirkung deutlich einschränkt. Leider ist die in DE 102 12 580 A1 genannte Möglichkeit der Integration von latentwämespeichernden Stoffen in einer Wärmedämmplatte großtechnisch bis heute nicht gelungen. Man kann solche Platten im Markt nicht käuflich erwerben. Die DE 102 12 580 A1 betrifft ein Dämmsystem für Außenwände eines Gebäudes mit einer auf der Außenwand aufgebrachten Wärmedämmschicht und einer auf der Wärmedämmschicht angeordneten Außenschicht, wobei in die Außenschicht oder in die Wärmedämmschicht ein latentwärmespeicherndes Material eingebracht oder zwischen Wärmedämmschicht und Außenschicht ein latentwärmespeicherndes Material angeordnet ist. Mit diesem Dämmsystem soll es gelingen, auf Außenwänden das mikrobielle Wachstum durch Verminderung der Taupunktunterschreitungen zu verringern.

Aus der DE 10 2004 008 201 A1 sind Schaumstoffplatten bekannt, bei deren Herstellung der Schmelze 1 bis 50 Gew.-% eines faserförmigen Füllstoffs, bspw. Glasfasern, und/oder eines partikelförmigen, von Graphit verschiedenen Füllstoffs, z.B. Calciumcarbonat, Calciumsulfat oder Talkum, aufweist. Auf diese Art und Weise sollen Schaumstoffplatten mit verbesserter Druckfestigkeit zugänglich sein.

Die DE 41 10 116A1 offenbart eine Wärmedämmung, bei der zusätzlich zu wärmeisolierenden Schichten auch wärmespeichernde Materialien in Form von Latentspeichern zugegen sind. Diese Latentspeichermaterialien können in die Wärmedämmschichten eingebettet sein oder an einer Seite von diesen anliegen. Mit dieser Art von Wärmedämmung soll sich trotz geringerer Dämmstoffdicken der Wärmestrom von der Innen- zur Außenseite eines Gebäudes wirkungsvoll verringern lassen.

Die US 5,532,039 betrifft ein flexibles thermisches Dämmmaterial, umfassend zwei beabstandete Folien, wobei zwischen diesen Folien eine Zellstruktur vorliegt, welche mit einem Latentwärmespeichermaterial gefüllt ist. Hierbei hat das Latentwärmespeichermaterial gleichmäßig verteilt zwischen den beiden flexiblen Folien vorzuliegen. Die in der US 5,532,039 offenbarte spezielle Folienstruktur gewährleistet eine solche gleichförmige Verteilung des Latentwärmespeichermaterials über das gesamte eingeschlossene Volumen.

Die FR 2 540 235 geht ein auf ein Wärmedämmelement in Form eines Latentwärmespeichers mit einer elastischen Hülle. Die Umhüllung hat vollständig bzw. nahezu vollständig mit dem Latentwärmespeichermaterial gefüllt zu sein.

In der DE 103 05 431 A1 wird eine Gebäudeaußenwandung offenbart, die durch ihren konstruktiven Aufbau eine verringerte Bewuchsneigung aufweisen soll. Hierbei hat auf der von außen wärmegedämmten Gebäudeaußenwand mindestens eine Wärmespeicherschicht und darauf wiederum eine Isolationsschicht mit geringerer Wärmedämmwirkung vorzuliegen. Damit diese Isolationsschicht über eine genügend geringe Wärmeleitfähigkeit verfügt, ist gemäß der DE 103 05 431 A1 im Allgemeinen auf Stoffe mit einer Dichte bzw. Trockenrohdichte von kleiner als 1,2 kg/l in einer Schichtdicke von 3 mm zurückzugreifen. Während für die Wärmespeicherschicht ein Kalk-Zement-Unterputz offenbart wird, findet sich für die Isolationsschicht ein Oberputz beschrieben, dessen Trockenrohdichte durch Verwendung von Leichtzuschlag aus Hohlglasperlen auf 0,8 kg/l abgesenkt wurde.

Die DE 200 17 274 U1 beschreibt Dickstofffüllungen für Gebäudewandungsteile, welche in einer ausgehärteten Schicht zumindest anteilig ein rezykliertes Polystyrolgranulat sowie dazu mindestens ein hydraulisches Bindemittel und gegebenenfalls mindestens ein Additiv als weitere Komponenten enthält. Als wesentlicher Trockenbestandteil der Dickstoffschichten ist ein Polystyrolpartikel-Bindemittel-Granulat vorgesehen, bei dem unter definiertem Verpressungsdruck ein Bindemittel auf die Partikel-Oberflächen haftend aufgemahlen ist und wobei das Polystyrol-Partikel-Bindemittel-Granulat zumindest anteilig gereinigte, verpresste und oberflächegeknautschte Polystyrolpartikel, die größenbereichsdefiniert klassifiziert sind, enthält. Mit derartig ausgeführten Gebäudewandungsteilen sollen sich die Material- und Herstellungskosten sowie die hervorgehenden Energiekosten für die Wärmeversorgung eines Gebäudes senken lassen.

Einen schütt- und einblasbaren Dämmstoff zur Kerndämmung von zweischaligem Mauerwerk erhält man gemäß EP 1 927 703 A2 aus einem Gemisch von Polystyrol-Partikelschaumgranulat der Korngröße 2 mm bis 10 mm und Polystyrol-Partikelschaum-Fräßmehl mit einer Korngröße bis 4 mm.

Die DE 10 2008 046 444 A1 betrifft eine Fassadenplatte aus mindestens einer Dämmschicht, einer Gasleitschicht und einem Wärmespeicherelement in Form eines Latentwärmespeichers. Die Gasleitschicht umfasst Kanäle oder andere Strukturen, die zum Leiten von Gasen geeignet sind. Diese Gasleitschicht ist in der Fassadenplatte außen angeordnet. Bei dieser Konstruktion ist vorgesehen, dass die erwärmte Luft innerhalb der Gasleitschicht über den Fassadenverlauf nach oben bis zur Traufe aufsteigt, wo sie mittels eines mit Ventilatoren versehenen Entlüftungssystems in das Innere des Gebäudes überführt wird.

Die DE 198 31 295 A1 stellt ab auf Leichtbeton, in welchem EPS-Kugeln von Zement umhüllt neben porösem vorgenässten Blähschiefer und einem Fließmittel auf Melaninbasis vorliegen. Mit diesem Leichtbeton sollen sich Fertighauselemente mit guter Wärmedämmung und Wärmeisolierung bei Minimierung der Herstellungs- und Fertigungskosten erhalten lassen.

In der DE 100 63 398 A1 wird eine Verbundplatte aus einer Mineralschicht und einer Kunststoffschaumschicht offenbart, wobei die Mineralschicht zur Hinterlüftung von der Kunststoffschaumschicht beabstandet zu sein hat. Diese Beabstandung kann durch eine Kunststoffschaumzwischenschicht, welche mit Noppen oder Stegen versehen ist, vorgenommen werden.

Die DE 199 54 772 A1 betrifft Mikrokapseln als Latentwärmespeicher mit einem Kern aus lipophilem Material und einer polymeren Wandstruktur, welche aus siliziumorganischen Verbindungen gebildet ist. Diese Mikrokapseln sollen sich gegenüber den herkömmlichen Latentwärmespeichern durch eine höhere Temperaturbeständigkeit auszeichnen und sich in mineralische, abbindende Baustoffe wie Putz, Mörtel oder Beton ohne weiteres einarbeiten lassen.

Es ist noch stets wünschenswert, auf Wärmedämmmaterialien zurückgreifen zu können, die nicht nur eine optimale Wärmedämmung von Gebäuden ermöglichen, sondern die, ohne auf antimikrobiell bzw. biozid wirkende Mittel angewiesen zu sein, die Veralgung und/oder Pilzbildung auf Gebäudeoberflächen wirksam und dauerhaft verhindern hilft.

Der vorliegenden Erfindung lag daher die Aufgabe zugrunde, Dämmmaterialien zur Verfügung zu stellen, die nicht mehr mit den Nachteilen der Dämmmaterialien des Stands der Technik behaftet sind und die darüber hinaus, ohne biozid ausgestattet zu sein, den Befall mit Mikroorganismen, wie Algen oder Pilzen unterbinden helfen und die sich kostengünstig herstellen lassen und gegenüber herkömmlichen Dämmmaterialien keine zusätzlichen Maßnahmen bei der Anbringung und Befestigung mit sich bringen.

Demgemäß wurde eine Wärmedämmplatte gefunden mit einer ersten Oberfläche, insbesondere Frontseite, und einer der ersten Oberfläche gegenüberliegenden zweiten Oberfläche, insbesondere Rückseite, sowie mit einer durchschnittlichen Dicke D, enthaltend eine erste Dämmschicht mit einer ersten durchschnittlichen Dicke d1, umfassend oder gebildet aus mindestens einem ersten geschäumten Polymermaterial, die benachbart zur zweiten Oberfläche vorliegt oder diese umfasst, eine zweite Dämmschicht mit einer zweiten durchschnittlichen Dicke d2, umfassend oder gebildet aus mindestens einem zweiten geschäumten Polymermaterial, die benachbart zur ersten Oberfläche vorliegt oder diese umfasst, und mindestens eine Wärmespeicherschicht mit einer dritten durchschnittlichen Dicke d3, die zwischen der ersten und der zweiten Dämmschicht vorliegt, enthaltend mindestens ein latentwärmespeicherndes Material und/oder mindestens ein Funktions- bzw. Speichermaterial mit einer spezifischen Wärmekapazität, die größer ist als die spezifische Wärmekapazität der ersten Dämmschicht und der zweiten Dämmschicht, wobei die durchschnittliche erste Dicke d1 größer ist als die durchschnittliche zweite Dicke d2, wobei die Wärmeleitfähigkeit der ersten und zweiten Dämmschicht kleiner 0,045 W/(m x K) ist und wobei die Dichte der ersten und zweiten Dämmschicht kleiner 0,3 g/cm³ ist, insbesondere im Bereich von 0,01 bis 0,3 g/cm³ liegt.

Die erfindungsgemäße Wärmedämmplatte kann in einer Ausführungsform als integrale Einheit vorliegen, sie kann aber auch aus zwei oder mehreren separaten Platten, Schichten oder Lagen gebildet sein, welche über geeignete Verbindungsmittel, beispielsweise Kleber oder Kaschiermittel, oder Schweißungen miteinander verbunden sind. Geeignete Kleber für z.B. geschäumte Polymere wie geschäumtes Polystyrol oder geschäumtes Polyurethan sind dem Fachmann bekannt. Für letztere eignen sich insbesondere auch Polyurethankleber.

Mit der erfindungsgemäßen Wärmedämmplatte lassen sich die Häufigkeit wie auch die Dauer der Taupunktunterschreitungen signifikant verringern, so dass ein Befall einer Außenwand mit Mikroorganismen, beispielsweise eine Veralgung komplett unterbunden oder merklich zurückgedrängt werden kann.

Die erfindungsgemäße Wärmedämmplatte lässt sich kostengünstig herstellen, wozu ebenfalls beiträgt, dass in einer bevorzugten Ausführungsform für die ersten und zweiten geschäumten Polymermaterialien identische Ausgangspolymere verwendet werden können.

Demgemäß ist es ohne weiteres möglich, dass die Dichte der ersten und zweiten Dämmschicht und/oder die Wärmeleitfähigkeit der ersten und zweiten Dämmschicht im Wesentlichen übereinstimmen.

In einer zweckmäßigen Ausgestaltung ist vorgesehen, dass die durchschnittliche dritte Dicke d3 im Bereich von 2 mm bis 40 mm, vorzugsweise im Bereich von 5 mm bis 20 mm und besonders bevorzugt im Bereich von 7 mm bis 15 mm liegt, die durchschnittliche zweite Dicke d2 im Bereich von 0,5 mm bis 20 mm, vorzugsweise im Bereich von 1,0 mm bis 15 mm und besonders bevorzugt im Bereich von 1,0 mm bis 10 mm liegt, und/oder dass die durchschnittliche erste Dicke d1 im Bereich von 30 bis 200 mm, vorzugsweise im Bereich von 40 bis 150 mm liegt. Die durchschnittliche zweite Dicke d2, d.h. die Dicke der zweiten Dämmschicht, welche üblicherweise die Frontseite der Wärmedämmplatte bildet oder dieser zugewandt ist liegt ganz bevorzugt im Bereich von 2,0 mm bis 6 mm und besonders bevorzugt im Bereich von 2,5 mm bis 5 mm und insbesondere im Bereich von 3,0 bis 4,0 mm. Beispielsweise kann die Dicke d2 der zweiten Dämmschicht bei Verwendung einer zweiten Dämmschicht mit einer Wärmeleitfähigkeit im Bereich von 0,032, oder darüber, bis 0,045 W/(m x K) in einem Bereich von 5 bis 8 mm liegen, bei Verwendung einer zweiten Dämmschicht mit einer Wärmeleitfähigkeit im Bereich kleiner oder gleich 0,032 W/(m x K) im Bereich von 2 bis 5 mm.

Solche Wärmedämmplatten sind besonders bevorzugt, bei denen die Wärmeleitfähigkeit der ersten und/oder der zweiten Dämmschicht kleiner oder gleich 0,035 W/(m x K) und besonders bevorzugt kleiner oder gleich 0,028 W/(m x K) ist.

In einer weiteren Ausgestaltung kann vorgesehen sein, dass die erste Dämmschicht, die zweite Dämmschicht und die Wärmespeicherschicht als separate Schichten vorliegen, die miteinander verbunden oder verbindbar sind, oder dass die erste Dämmschicht, die zweite Dämmschicht und die Wärmespeicherschicht integraler Bestandteil der Wärmedämmplatte sind oder als integrale Einheit die Wärmespeicherschicht bilden oder dass die erste Dämmschicht und die Wärmespeicherschicht eine integrale Einheit bilden, die mit der zweiten Dämmschicht als separater Schicht verbunden oder verbindbar ist.

Demgemäß liegt die erfindungsgemäße Wärmedämmplatte in einer bevorzugten Ausführungsform als integrales Bauteil vor, was in der Regel die Herstellung wie auch die Handhabung stark vereinfacht.

Ferner kann vorgesehen sein, dass die Wärmespeicherschicht eine Materiallage, insbesondere umfassend oder gebildet aus mindestens einem dritten geschäumten Polymermaterial, umfasst bzw. aus dieser gebildet ist, die Perforationen und/oder Einlässe aufweist, welche mit dem latentwärmespeichernden Material und/oder dem Funktionsmaterial teilweise oder vollständig gefüllt sind. Bei dieser Ausgestaltung sind unter Perforationen Löcher oder Öffnungen in der Materiallage zu verstehen, die sich durch die gesamte Materiallage erstrecken, während die Einlässe in der Materiallage nicht vollständig durch diese hindurchgehen, d.h. keine Löcher oder Öffnungen im Sinne von Perforationen darstellen, gleichwohl Hohlräume, z.B. Sacklöcher, bilden, die mit dem latentwärmespeichernden Material und/oder dem Funktionsmaterial befüllt werden können. Dabei kann auch vorgesehen sein, dass die Materiallage aus einem solchen dritten geschäumten Polymermaterial gebildet wird, welches mit dem der ersten und/oder zweiten Dämmschicht, vorzugsweise der ersten und zweiten Dämmschicht übereinstimmt.

In einer zweckmäßigen Ausführungsform der Erfindung wird auf die erste Dämmschicht aus einem ersten geschäumten Polymermaterial eine Perforationen enthaltende Materiallage aus einem dritten geschäumten Polymermaterial aufgebracht und mit dieser, insbesondere flüssigkeitkeitsdicht, verbunden, beispielsweise mittels Verklebung und/oder Verschweißung. Anschließend werden die Perforationen mit dem latentwärmespeichernden Material, z.B. einem Wachs wie Paraffin, oder einem Salzhydrat, vorzugsweise in verflüssigter Form, unter Ausbildung der Wärmespeicherschicht befüllt. Sodann kann, vorteilhafterweise nach Erkalten und Verfestigen des latentwärmespeichernden Materials, mit der zweiten Dämmschicht aus dem zweiten geschäumten Polymermaterial die befüllte Materiallage abgedeckt und mit dieser, insbesondere flüssigkeitsdicht, verbunden werden, beispielsweise mittels Verklebens oder Verschweißens, unter Ausbildung der erfindungsgemäßen Wärmedämmplatte. Alternativ kann eine erste Dämmschicht aus einem ersten geschäumten Polymermaterial mit einer Vielzahl an Einlässen auf der der ersten Oberfläche gegenüberliegenden Seite versehen werden. Diese reichen nicht bis an die gegenüberliegende Seite der ersten Dämmschicht. Vorzugsweise erstrecken sich diese nicht mehr als 2/3, insbesondere nicht mehr als die Hälfte der durchschnittlichen Dicke d1 in die erste Dämmschicht hinein. Nach Befüllen mit einem latentwärmespeichernden Material, wie vorangehend beschrieben, bildet der obere Bereich der Dämmschicht die Wärmespeicherschicht. Diese wird wiederum mit der zweiten Dämmschicht aus dem zweiten geschäumten Polymermaterial abgedeckt und verbunden unter Ausbildung der erfindungsgemäßen Wärmedämmplatte, wie vorangehend beschrieben. Bei den vorangehend genannten Ausführungsformen werden für die ersten und zweiten geschäumten Polymermaterialien sowie gegebenenfalls für das dritte geschäumte Polymermaterial der Materiallage vorzugsweise die gleichen Polymerschaummaterialien, beispielsweise Polystyrol, Polyurethan oder Phenolharze verwendet. Bei den genannten Ausführungsformen der erfindungsgemäßen Wärmedämmplatte ist es möglich, auf die Verkapselung, Mikroverkapselung oder Folienumhüllung des latentwärmespeichernden Materials vollständig zu verzichten.

Des weiteren ist es möglich, die erste Dämmschicht, die zweite Dämmschicht und/oder die Materiallage vollständig oder teilweise, ein- oder beidseitig mit einem Vlies und/oder einer Metall-, insbesondere Aluminiumfolie zu kaschieren.

Das Funktionsmaterial und/oder das latentwärmespeichernde Material liegen vorzugsweise im Wesentlichen gleichmäßig verteilt über der Fläche der erfindungsgemäßen Wärmedämmplatte in der Wärmespeicherschicht vor. Eine nicht gleichmäßige Verteilung schränkt jedoch den erfindungsgemäßen Effekt nicht signifikant ein. In einer zweckmäßigen Ausgestaltung decken die Funktionsmaterialien und/oder die latentwärmespeichernden Materialien wenigstens 1/6 der Fläche, die durch die Wärmespeicherschicht bzw. die Wärmedämmplatte aufgespannt wird, ab, vorzugsweise mindestens 1 /5 dieser Fläche, besonders bevorzugt mindestens ¼ dieser Fläche und ganz besonders bevorzugt mindestens 1/3 dieser Fläche.

Funktionsmaterial im Sinne der vorliegenden Erfindung stellt einen Wärmespeicher bzw. Speichermaterial dar mit einer spezifischen Wärmekapazität, die größer ist als die spezifische Wärmekapazität der ersten Dämmschicht und der zweiten Dämmschicht. Demgemäß nimmt das Funktionsmaterial mehr Wärmeenergie auf als die erste und zweite Dämmschicht und benötigt hierfür auch einen bestimmten Zeitraum. Unterschreitet die Temperatur auf der Außenseite eines Gebäudes, d.h. an der Frontseite der Wärmedämmplatte die Temperatur des Funktionsmaterials, wird Wärmeenergie in Richtung der Frontseite abgegeben, allerdings aufgrund der zweiten Dämmschicht zeitlich verzögert.

In einer zweckmäßigen Ausführungsform ist vorgesehen, dass das Funktionsmaterial eine spezifische Wärmekapazität von 0,5 kJ/(kg K) oder mehr, bevorzugt von 0,7 kJ/(kg K) oder mehr, und/oder eine Dichte von mindestens 0,9 kg/l, insbesondere mindestens 1,5 kg/l, und besonders bevorzugt mindestens 2,0 kg/l, aufweist.

Erfindungsgemäß ist ferner vorgesehen, dass die Polymere für die geschäumten Polymermaterialien der ersten Dämmschicht, der zweiten Dämmschicht und/oder der Materiallage ausgewählt sind aus Polysulfonen, Phenolharze, Polyätherimiden, Polyetherketonen, Polyurethanen, Polymethylmethacrylaten, Polypropylen, Poly(meth)acrylimiden, Polyimiden, Styrolpolymerisaten und deren Mischungen, wobei Polyurethane und Polystyrol als Styrolpolymerisat bevorzugt sind. Hierbei sind geeignete Styrolpolymerisate ausgewählt aus Polystyrol, Styrol-Acrylnitril-Copolymer (SAN), Acrylnitril-Butadien-Styrol-Copolymer (ABS), und Acrylnitril-Styrol-Acrylester-Copolymer (ASA). Bevorzugt wird auf geschäumtes Polystyrol, bspw. als EPS- oder XPS-Material, oder auf Phenolharzschäume oder auf geschäumte Polyurethane für die erste und zweite Dämmschicht und gegebenenfalls auch für die Materiallage der Wärmespeicherschicht zurückgegriffen.

Als geeignete latentwärmespeichernde Materialien kommen Wasser, Essigsäure, Salze, Salzhydrate, Paraffine, Fettsäuren oder deren Mischungen, vorzugsweise in verkapselter oder Mikroverkapselter Form in Betracht. Geeignete latentwärmespeichernde Materialien sind dem Fachmann im Übrigen bekannt. Die Verkapselung bzw. Mikroverkapselung von latentwärmespeichernden Materialien ist dem Fachmann geläufig. Hierfür kann auf bekannte Umhüllungsmaterialien, bspw. elastische Folien, zurückgegriffen werden. Latentwärmespeichernde Materialien sind auch als sogenannte PCM bekannt (Phase Change Material). Vorteilhafterweise wird als latentwärmespeicherndes Material ein solches ausgewählt, das in einem Temperaturbereich von 0 bis 35, vorzugsweise von 10 bis 25°C einen Phasenwechsel hat. Besonders geeignet sind auch Mischungen aus latentwärmespeichernden Materialien mit unterschiedlichen Phasenumwandlungstemperaturen, beispielsweise von 8, 10, 12 und 15°C.

Das Funktionsmaterial umfasst in einer besonders zweckmäßigen Ausgestaltung mineralische Stoffe, insbesondere in Form von partikulärem Schüttgut. Hierbei kann es sich um Kalkstein, insbesondere in Granulatform, Schotter, Kies oder Splitt oder deren Mischungen handeln. Als besonders geeignet für die erfindungsgemäßen Wärmedämmplatten haben sich in partikulärer Form vorliegende Funktionsmaterialien mit einem mittleren Durchmesser im Bereich von 2 bis 10 mm, vorzugsweise im Bereich von 4 bis 8 mm erwiesen.

Dabei kann auch vorgesehen sein, dass die Wärmespeicherschicht als Mörtel- oder Putzschicht vorliegt bzw. eine Mörtel- oder Putzschicht umfasst.

Die Dicke D der erfindungsgemäßen Wärmedämmplatte liegt für gängige Anwendungen, bspw. für die Dämmung von Außenfassaden im Bereich von 50 bis 250 mm. Hierbei bildet üblicherweise die erste Oberfläche bzw. Fronseite die Außenseite einer Fassadendämmung und die zweite Oberfläche bzw. Rückseite die Innenseite einer Fassadendämmung.

Die der Erfindung zugrundeliegende Aufgabe wird ferner gelöst durch ein Dämmsystem, umfassend mindestens eine erfindungsgemäße Wärmedämmplatte und benachbart zur ersten Oberfläche bzw. Frontseite oder hierauf an- bzw. aufliegend eine Außenschicht, insbesondere erste bzw. Außenputzschicht, und/oder benachbart zur zweiten Oberfläche bzw. Rückseite oder hierauf an- bzw. aufliegend eine Innenschicht, insbesondere zweite bzw. Innenputzschicht. Dabei kann vorgesehen sein, dass die erste bzw. Außenputzschicht eine Porosität kleiner 50 %, vorzugsweise kleiner 45 % und bevorzugt kleiner 35 % aufweist.

Die erfindungsgemäßen Dämmsysteme können ferner gekennzeichnet sein durch eine Wand, einen Boden oder eine Decke benachbart zur oder auf- bzw. anliegend an die zweite Oberfläche bzw. Rückseite der Wärmedämmplatte und/oder benachbart zur oder auf- bzw. anliegend an die Innenschicht.

Erfindungsgemäße Wärmedämmplatten lassen sich in einer Ausführungsform herstellen, nach einem Verfahren, umfassend die Schritte: Zurverfügungstellung der ersten und zweiten Dämmschicht sowie der Wärmespeicherschicht, Verbinden der ersten Dämmschicht mit der Wärmespeicherschicht an der der zweiten Oberfläche gegenüberliegenden Seite und Verbinden der Wärmespeicherschicht auf der der ersten Dämmschicht gegenüberliegenden Seite mit der zweiten Dämmschicht an der der ersten Oberfläche gegenüberliegenden Seite oder Verbinden der zweiten Dämmschicht mit der Wärmespeicherschicht an der der ersten Oberfläche gegenüberliegenden Seite und Verbinden der Wärmespeicherschicht auf der der zweiten Dämmschicht gegenüberliegenden Seite mit der ersten Dämmschicht an der der zweiten Oberfläche gegenüberliegenden Seite.

Alternativ können die erfindungsgemäßen Dämmplatten hergestellt werden nach einem Verfahren umfassend die Schritte: Zurverfügungstellung einer ersten und zweiten Dämmschicht,
vorzugsweise im Wesentlichen vertikales Ausrichten der ersten Dämmschicht, Aufbringen oder Auflegen von partikulärem Funktionsmaterial und/oder latentwärmespeitherndem Material, insbesondere in verkapselter oder mikroverkapselter Form, das vorzugsweise über eine höhere Festigkeit als die erste Dämmschicht verfügt, teilweises oder vollständiges Einbringen, insbesondere Eindrücken bzw. Einpressen, des Funktionsmaterials und/oder des latentwärmespeichernden Materials in die erste Dämmschicht unter Ausbildung der Wärmespeicherschicht, Abdecken des eingebrachten, insbesondere eingepressten bzw. eingedrückten, Funktionsmaterials mit der zweiten Dämmschicht und Verbinden derselben mit der ersten Dämmschicht.

Bei dieser Variante bildet ein oberflächennaher Abschnitt der ersten Dämmschicht die Wärmespeicherschicht der erfindungsgemäßen Wärmedämmplatte. Bspw. kann als Funktionsmaterial auf Schotter, Kies und/oder Splitt zurückgegriffen werden. Hierbei kann partikuläres Funktionsmaterial z.B. über eine Walze bzw. Walzenrolle in die der ersten Oberfläche abgewandte Seite der ersten Dämmschicht eingedrückt bzw. eingepresst werden. Als besonders zweckmäßig hat sich erwiesen, diesen Einbringprozess des partikulären Funktionsmaterials an einer frisch hergestellten ersten Dämmschicht aus geschäumtem ersten Polymermaterial vorzunehmen. Auch ist es möglich, diesen Einbringprozess des partikulären Funktionsmaterials an einer Dämmschicht aus geschäumtem Polymermaterial vorzunehmen, welches noch nicht vollständig ausgeschäumt ist, jedoch vorzugsweise schon über das Stadium des rein vorgeschäumten Polymermaterials hinausgeht. Nach dem Einbringprozess kann der Schäumvorgang sodann vervollständigt werden.

In einer zweckmäßigen Ausgestaltung umfasst ein weiteres erfindungsgemäßes Verfahren die Schritte: Zurverfügungstellung der ersten und zweiten Dämmschicht sowie der Materiallage enthaltend Perforation und/oder Einlässe, vollständiges oder teilweises Befüllen der Perforationen und/oder Einlässe mit dem Funktionsmaterial und/oder dem latentwärmespeichernden Material, Verbinden der befüllten Materiallage mit der ersten Dämmschicht sowie auf der gegenüberliegenden Seite mit der zweiten Dämmschicht.

Bei dieser Ausführungsform sind die Einlässe der Materiallage auf derjenigen Seite vorgesehen, die der ersten Oberfläche gegenüberliegt, d.h. die von der zweiten Dämmschicht abgedeckt werden. Dabei kann vorgesehen sein, dass die Perforationen und/oder Einlässe enthaltende Materiallage zunächst mit der ersten Dämmschicht verbunden und anschließend die Perforationen und/oder Einlässe mit dem Funktionsmaterial und/oder dem latentwärmespeichernden Material befüllt werden. Das Funktionsmaterial und/oder das latentwärmespeichernde Material liegen dabei vorzugsweise im Wesentlichen gleichmäßig verteilt über der Fläche der erfindungsgemäßen Wärmedämmplatte in der Wärmespeicherschicht vor. In einer zweckmäßigen Ausgestaltung decken die Funktionsmaterialien und/oder die latentwärmespeichernden Materialien bzw. die Fläche der Perforationen und/oder Einlässe wenigstens 1/6 der Fläche, die durch die Wärmespeicherschicht bzw. die Wärmedämmplatte aufgespannt wird, ab, vorzugsweise mindestens 1/5 dieser Fläche, besonders bevorzugt mindestens ¼ dieser Fläche und ganz besonders bevorzugt mindestens 1/3 dieser Fläche.

Gemäß einer weiteren Ausführungsform eines erfindungsgemäßen Verfahrens können erfindungsgemäße Wärmedämmplatten dadurch erhalten werden, dass man z.B. über Nadeln, die man in die der Frontseite zugewandten Oberfläche der ersten Dämmschicht einführt, latentwärmespeicherndes Material, insbesondere oberflächennah, z.B. unter Druck, in die Dämmschicht unter Ausbildung einer integralen Wärmespeicherschicht injiziert.

Ein weiteres Verfahren zur Herstellung der erfindungsgemäßen Wärmedämmplatten, insbesondere solcher auf Basis von geschäumtem Polyurethan, sieht vor, dass die Fertigung im Bandverfahren erfolgt und die Platten direkt hinter der Kaschierung einseitig hoch wärmekapazitives, insbesondere Funktionsmaterial, oder latentwärmespeicherndes Material bzw. eine Kombination daraus enthalten.

Bei diesem Verfahren ist zweckmäßigerweise vorgesehen, dass das Material bzw. Funktionsmaterial und/oder das latentwärmespeichernde Material, insbesondere kurz, vor dem Schäumprozess auf die untere Bahn aufgebracht wird.

Auch kann vorgesehen sein, dass das Material bzw. Funktionsmaterial und/oder das latentwärmespeichernde Material vor dem Schäumprozess zusätzlich fixiert wird.

Solche Funktionsmaterialien sind besonders geeignet für den Einsatz bei den erfindungsgemäßen Verfahren, welche eine spezifische Wärmekapazität von mehr als 0,5 kJ/(kg K), bevorzugt von mehr als 0,7 kJ/(kg K) aufweisen.

Selbstverständlich kann man auch ein Gemisch aus hoch wärmekapazitiven, insbesondere Funktionsmaterial, und latentwärmespeichernden Stoffen einsetzen.

Ferner ist es möglich, das Material, insbesondere Funktionsmaterial, in Form eines Granulats, einer Paste und/oder einer zusätzlichen Bahn aufzubringen.

Dabei kann vorgesehen sein, dass das Material, insbesondere Funktionsmaterial und/oder das latentwärmespeichernde Material, in Mustern aufgebracht wird, die einen Zuschnitt der Wärmedämmplatten mit üblichen Werkzeugen ermöglichen, ohne das Material zu beschädigen oder selbst beschädigt zu werden.

Alternativ kann vorgesehen sein, dass statt des Aufbringens von Granulat, Paste oder Bahn eine bereits mit dem Material vorbereitete Kaschierung zum Einsatz kommt.

Die Erfindung betrifft Verfahren, mit denen die großtechnische Herstellung von Wärmedämmplatten mit integrierten latentwämespeichernden Materialien oder Stoffen mit hoher Wärmekapazität, insbesondere Funktions- bzw. Speichermaterialien wie vorangehend ausgeführt, überraschend kostengünstig möglich ist.

Die Herstellung von z.B. Polyurethan-Wärmedämmstoffen kann im Bandverfahren erfolgen. Dabei schäumt die polymerisierende Masse zwischen zwei horizontal angeordneten Trägermaterialen solange auf, bis die gewünschte Dicke und Dichte erreicht ist. Das Trägematerial kann eine Papier-, Kunststoff-, Vlies- , Bitumen- oder eine andere geeignete Bahn sein. Das erfindungsgemäße Verfahren umfasst in dieser Ausführungsform die Platzierung und ggf. Fixierung des hoch wärmekapazitiven und/oder latentwärmespeichernden Materials auf der unteren Bahn. Der anschließende Schäumprozess ist davon praktisch unbeeinflusst. Aufgrund der Dichteunterschiede und/oder der Fixierung verbleibt das Funktionsmaterial bzw. das hoch wärmekapazitive und/oder latentwärmespeichernde Material auf der Unterseite und schäumt nicht mit nach oben. Die fertige Platte enthält zwischen der Kaschierung und der Wärmedämmschicht das gewünschte Material geschützt vor mechanischen Einflüssen. Die so veränderte Plattenseite ist die Außenseite der Dämmung im Wärmedämm-Verbundsystem. Die erfindungsgemäß veränderte Schicht ist deshalb besonders wirksam. Diese Ausführungsform des erfindungsgemäßen Verfahrens ermöglicht eine in weiten Bereichen variable Menge an Funktionsmaterial auf einer Plattenseite zu konzentrieren. Dadurch lassen sich verschiedene bauphysikalische Szenarien gleichermaßen berücksichtigen. Durch Anpassung der Einsatzmengen bei der Herstellung der Wärmedämmplatten können verschiedene Produkte auch in kleinen Mengen kostengünstig produziert werden.

Durch die alleinige Verwendung von Funktionsmaterialien bzw. hochwärmekapazitiven Materialien wie z.B. mineralische Granulate hoher Dichte lassen sich erfindungsgemäß Kostenvorteile erzielen und die Dauerhaftigkeit der Wärmedämmplatten bzw. unter deren Verwendung erstellter Wärmedämm-Verbundsysteme erhöhen.

Die erfindungsgemäßen Wärmedämmplatten bzw. die erfindungsgemäßen Dämmsysteme eignen sich für die Wärmeisolierung von Außenfassaden oder von Bestandteilen solcher Außenfassaden.

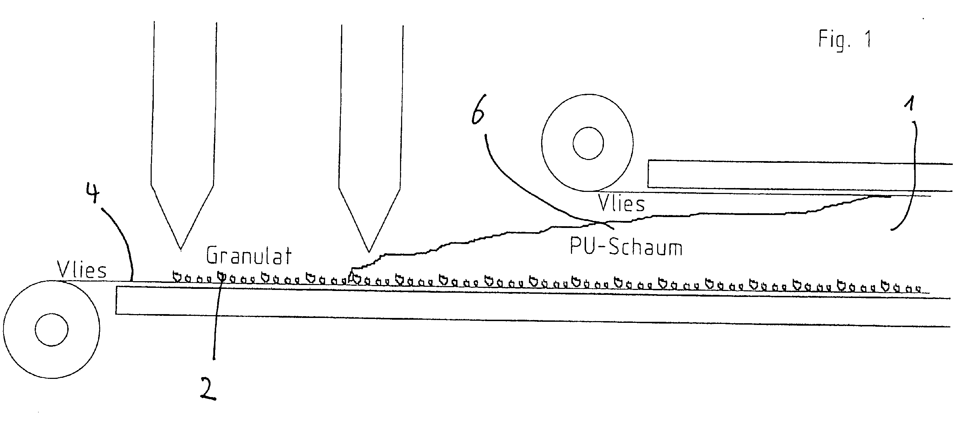

Das Ausführungsbeispiel in Fig. 1 umfasst die Verwendung von Al₂O₃ in Granulatform mit einer spezifischen Wärmekapazität von ca. 0,78 kJ/K als Wärmespeicher bzw. Funktionsmaterial 2. Die Kaschierung 4 ist aus einem Glasvlies gebildet. Auf dieses Glasvlies wird im laufenden Produktionsprozess das Al₂O₃ in Form eines Granulats 2 mit einer Korngröße zwischen 3 und 6 mm locker aufgestreut, so dass etwa 70 % des Vlieses 4 bedeckt ist. Auf diese Weise lassen sich ca. 6 kg/m² zusätzlichen Wärmespeicher aufbringen, kurz bevor die aufschäumende Masse, aus der im folgenden Polyurethanschaum wird, darauf fließt und das wärmespeichernde Material zwischen Vlies 4 und Schaum 6 integriert. Aufgrund der Dichte des Al₂O₃ von 4 kg/l verbleibt das Granulat auf dem Vlies 4. Die Wärmedämmplatte 1 ist insgesamt 120 mm dick. Bei einer angenommenen Temperaturdifferenz im Tagesverlauf von 10 °C beträgt die zusätzlich speicherbare Energiemenge etwa 47 kJ/m².

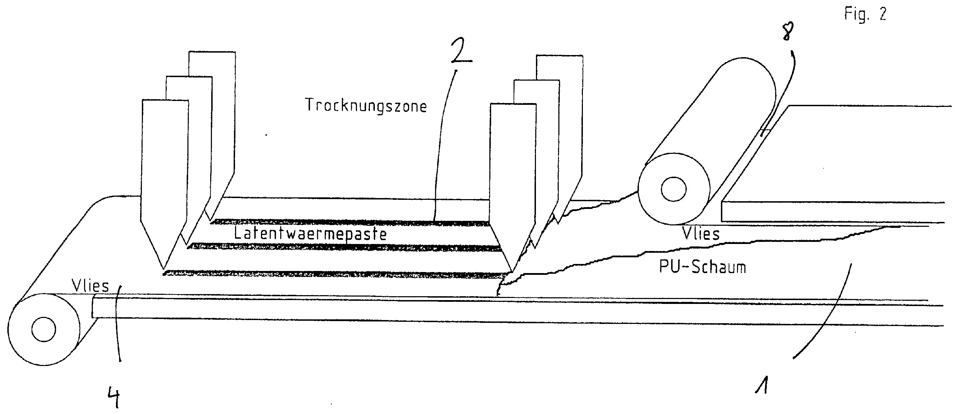

Ein weiteres Ausführungsbeispiel in Fig. 2 betrifft die Herstellung einer 100 mm dicken Polyurethanschaumplatte 1 unter Verwendung eines Glasvlieses 4 als Kaschierung. Im laufenden Herstellungsprozess bewegen sich die untere und obere Kaschierung 4, 8 mit einer Geschwindigkeit von 0,2 m/s. Der zusätzliche Wärmespeicher 2 ist hier eine dispersionsgebundene Paste mit einer Nassdichte von 1,1 kg/l. Diese Paste enthält 35 % des Latentwärmespeichers Micronal PCM der BASF, der in mikroverkapselter Form vorliegt. Der Auftrag erfolgt in ca. 3 cm breiten Streifen auf die untere Kaschierung 4 in Laufrichtung. Der Abstand der Streifen zueinander beträgt ca. 1 cm, die Auftragsmenge 1,5 kg/m². Die Streifen sind ca. 1,8 mm hoch. Auf der sich anschließenden 5 m langen Trocknungsstrecke wird die Paste mit Hilfe von Infrarotstrahlung und Luftbewegung getrocknet und fixiert, so dass sie im anschließenden Schäumprozess vollständig auf der Kaschierung verbleibt und den Schäumprozess nicht stört. Die zusätzliche Latentwärmespeicherkapazität des Endproduktes beträgt ca. 48 kJ/m².

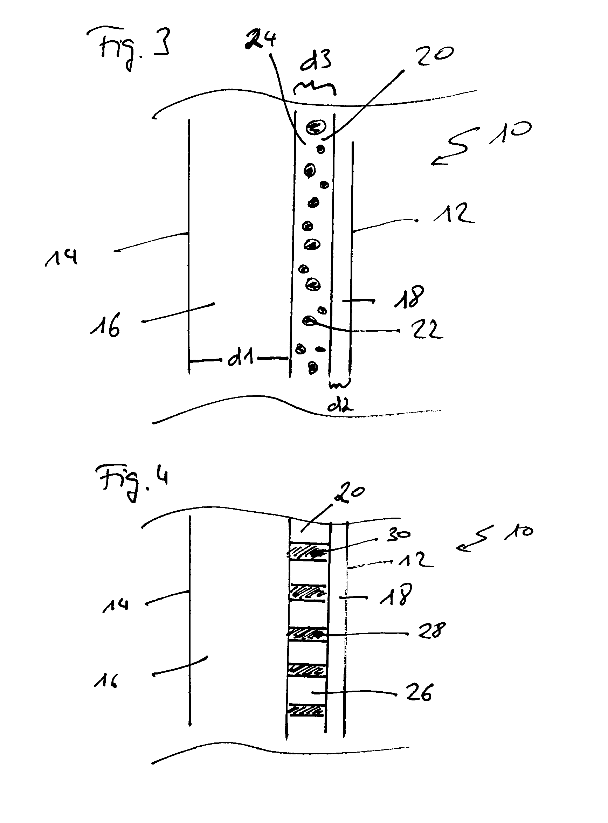

Fig. 3 zeigt eine weitere Ausführungsform einer erfindungsgemäßen Wärmedämmplatte 10 im Ausschnitt mit einer ersten Oberfläche 12 als Frontseite und einer zweiten Oberfläche 14 als Rückseite, z.B. für eine wärmeisolierende Fassadenverkleidung. Die Wärmedämmplatte 10 verfügt über eine erste Dämmschicht 16 aus einem ersten geschäumten Polymermaterial, z.B. Polystyrol oder Polyurethan, mit einer ersten durchschnittlichen Dicke d1, die benachvart zur zweiten Oberfläche 14 vorliegt bzw. diese umfasst, sowie ferner über eine zweite Dämmschicht 18 aus einem zweiten geschäumten Polymermaterial, z.B. Polystyrol oder Polyurethan, mit einer zweiten durchschnittlichen Dicke d2, die benachbart zur ersten Oberfläche 12 vorliegt bzw. diese umfasst. Des Weiteren verfügt die Wärmedämmplatte 10 über eine Wärmespeicherschicht 20 mit einer dritten durchschnittlichen Dicke d3, die zwischen der ersten und der zweiten Dämmschicht 16, 18 vorliegt, enthaltend mindestens ein latentwärmespeicherndes Material und/oder mindestens ein Funktions- bzw. Speichermaterial 22 mit einer spezifischen Wärmekapazität, die größer ist als die spezifische Wärmekapazität der ersten Dämmschicht und der zweiten Dämmschicht. Die durchschnittliche erste Dicke d1 ist größer als die durchschnittliche zweite Dicke d2. In der dargestellten Ausführungsform stellen die Funktionsmaterialien 20 in eine Putz- bzw. Mörtelschicht 24 eingelassene Kieselsteine dar. Alternativ kann z.B. auch auf granulierten Korund (Al2O3) oder granulierten Kalkstein zurückgegriffen werden.

Die in Fig. 4 gezeigte Ausführungsform einer erfindungsgemäßen Wärmedämmplatte 10 unterscheidet sich von der gemäß Fig. 3 dadurch, dass als Wärmespeicherschicht 20 eine Materiallage 26 aus einem dritten geschäumten Polymermaterial verwendet wird, z.B. Polystyrol oder Polyurethan, die Perforationen 28 aufweist, welche mit einem latentwärmespeichernden Material 30 gefüllt sind. Die Materiallage 26 ist sowohl mit der ersten als auch mit der zweiten Dämmschicht 16, 18 verbunden, z.B. verklebt. Hier ist es nicht notwendig, das Material 30 zu verkapseln oder mit einer Folie zu umhüllen. Selbstverständlich kann dieses ebenfalls vorgenommen werden, sofern gewünscht.

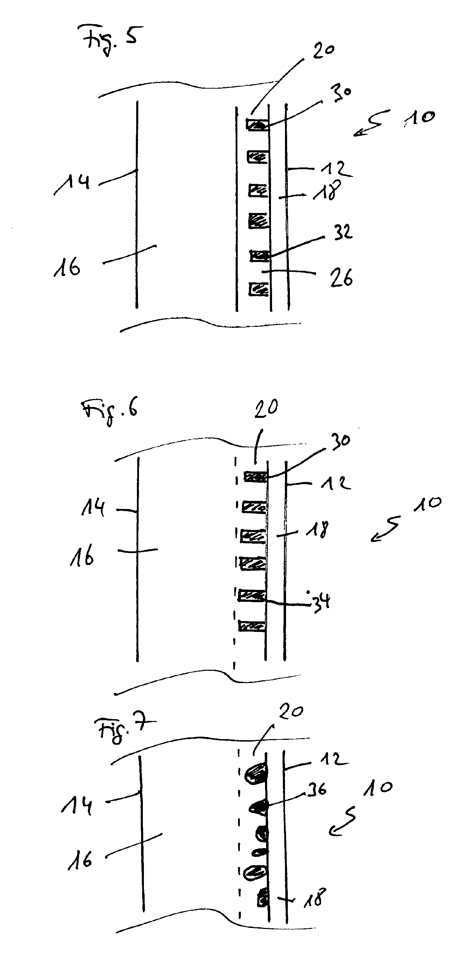

Die in Fig. 5 gezeigte Ausführungsform einer erfindungsgemäßen Wärmedämmplatte 10 unterscheidet sich von der gemäß Fig. 4 dadurch, dass als Wärmespeicherschicht 20 eine Materiallage 26 aus einem dritten geschäumten Polymermaterial verwendet wird, z.B. Polystyrol oder Polyurethan, die Einlässe 32 aufweist, welche mit einem latentwärmespeichemden Material 30 gefüllt sind. Die Einlässe 32 erstrecken sich nicht bis zur ersten Dämmschicht 16. Auf diese Weise wird ein höheres Maß an Dichtigkeit erreicht. Die Materiallage 26 ist sowohl mit der ersten als auch mit der zweiten Dämmschicht 16, 18 verbunden, z.B. verklebt.

Die in Fig. 6 gezeigte Ausführungsform einer erfindungsgemäßen Wärmedämmplatte 10 unterscheidet sich von der gemäß Fig. 5 dadurch, dass als Wärmespeicherschicht 20 gebildet wird durch Einlässe 34 in der ersten Dämmschicht 16 (angedeutet durch gestrichelte Linie), und zwar auf der Seite, die der Frontseite 12 zugewandt ist. Diese Einlässe 34 sind mit einem latentwärmespeichernden Material 30 gefüllt. Die Einlässe 32 werden durch die zweite Dämmschicht 18 dichtend abgedeckt.

Alternativ können die in den Perforationen oder Einlässen vorliegenden latentwärmespeichemden Materialien auch teilweise oder vollständig ersetzt werden durch die o.g. Funktionsmaterialien, z.B. durch partikuläre Funktionsmaterialien wie Schotter, Kies, Splitt, granulierten Kalkstein oder Korund in granulierter Form. Des Weiteren können die erfindungsgemäßen Wärmedämmplatten der Figuren 1 bis 7 auf der Frontseite unter Ausbildung des erfindungsgemäßen Dämmsystems eine äußere Putzschicht (nicht abgebildet) aufweisen. Auch kann eine Putzschicht an der Rückseite der erfindungsgemäßen Wärmedämmplatte anliegen oder befestigt sein (nicht abgebildet).

Die in Fig. 7 gezeigte Ausführungsform einer erfindungsgemäßen Wärmedämmplatte 10 unterscheidet sich von der gemäß Fig. 6 dadurch, dass die Wärmespeicherschicht 20 gebildet wird durch Funktionsmaterial 36 in partikulärer Form, wie vorangehend beschrieben, beispielsweise Kies, Schotter oder Splitt. Dieses Funktionsmaterial 36 wird in die der Frontseite 12 zugewandten Oberfläche der ersten Dämmschicht 16 eingedrückt bzw. eingepresst unter Ausbildung einer Wärmespeicherschicht 20 (durch gestrichelte Linie angedeutet). Auf diese Schicht 20 wird die zweite Dämmschicht 18 aufgelegt und hiermit verbunden unter Ausbildung der erfindungsgemäßen Wärmedämmplatte 10.

Die in der vorstehenden Beschreibung, in den Ansprüchen sowie in den Zeichnungen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Wärmedämmplatte mit einer ersten Oberfläche, insbesondere Frontseite, und einer der ersten Oberfläche gegenüberliegenden zweiten Oberfläche, insbesondere Rückseite, sowie mit einer durchschnittlichen Dicke D, enthaltend eine erste Dämmschicht mit einer ersten durchschnittlichen Dicke d1, umfassend oder gebildet aus mindestens einem ersten geschäumten Polymermaterial, die benachbart zur zweiten Oberfläche vorliegt oder diese umfasst,
eine zweite Dämmschicht mit einer zweiten durchschnittlichen Dicke d2, umfassend oder gebildet aus mindestens einem zweiten geschäumten Polymermaterial, die benachbart zur ersten Oberfläche vorliegt oder diese umfasst, und mindestens eine Wärmespeicherschicht mit einer dritten durchschnittlichen Dicke d3, die zwischen der ersten und der zweiten Dämmschicht vorliegt, enthaltend mindestens ein latentwärmespeicherndes Material und/oder mindestens ein Funktions- bzw. Speichermaterial mit einer spezifischen Wärmekapazität, die größer ist als die spezifische Wärmekapazität der ersten Dämmschicht und der zweiten Dämmschicht,
wobei die durchschnittliche erste Dicke d1 größer ist als die durchschnittliche zweite Dicke d2, wobei die Wärmeleitfähigkeit der ersten und zweiten Dämmschicht kleiner 0,045 W/(m x K), insbesondere kleiner oder gleich 0,035 W/(m x K), ist und wobei die Dichte der ersten und zweiten Dämmschicht kleiner 0,3 g/cm³ ist, insbesondere im Bereich von 0,01 bis 0,3 g/cm³ liegt.

2. Wärmedämmplatte nach Anspruch 1, **dadurch gekennzeichnet, dass** die durchschnittliche dritte Dicke d3 im Bereich von 2 mm bis 40 mm, vorzugsweise im Bereich von 5 mm bis 20 mm und besonders bevorzugt im Bereich von 7 mm bis 15 mm liegt, oder dass die durchschnittliche zweite Dicke d2 im Bereich von 0,5 mm bis 20 mm, vorzugsweise im Bereich von 1,0 mm bis 15 mm und besonders bevorzugt im Bereich von 1,0 mm bis 10 mm liegt, und/oder dass die durchschnittliche erste Dicke d1 im Bereich von 30 bis 200 mm, vorzugsweise im Bereich von 40 bis 150 mm liegt, und/oder dass die Dicke D im Bereich von 50 bis 250 mm liegt.

3. Wärmedämmplatte nach Anspruch 1 oder 2, **dadurch gekennzeichnet, dass** die Dichte der ersten und zweiten Dämmschicht und/oder die Wärmeleitfähigkeit der ersten und zweiten Dämmschicht im Wesentlichen übereinstimmen.

4. Wärmedämmplatte nach einem der vorangehenden Ansprüche, **dadurch gekennzeichnet, dass** die erste Dämmschicht, die zweite Dämmschicht und die Wärmespeicherschicht als separate Schichten vorliegen, die miteinander verbunden oder verbindbar sind, oder
dass die erste Dämmschicht, die zweite Dämmschicht und die Wärmespeicherschicht integraler Bestandteil der Wärmedämmplatte sind oder als integrale Einheit die Wärmespeicherschicht bilden oder
dass die erste Dämmschicht und die Wärmespeicherschicht eine integrale Einheit bilden, die mit der zweiten Dämmschicht als separater Schicht verbunden oder verbindbar ist.

5. Wärmedämmplatte nach einem der vorangehenden Ansprüche, **dadurch gekennzeichnet, dass** die Wärmespeicherschicht eine Materiallage, insbesondere umfassend oder gebildet aus mindestens einem dritten geschäumten Polymermaterial, umfasst bzw. aus dieser gebildet ist, die Perforationen und/oder Einlässe aufweist, welche mit dem latentwärmespeichernden Material und/oder dem Funktionsmaterial teilweise oder vollständig gefüllt sind.

6. Wärmedämmplatte nach einem der vorangehenden Ansprüche, **dadurch gekennzeichnet, dass** das Funktionsmaterial eine spezifische Wärmekapazität von 0,5 kJ/(kg K) oder mehr, bevorzugt von 0,7 kJ/(kg K) oder mehr, und/oder eine Dichte von mindestens 0,9 kg/l, insbesondere mindestens 1,5 kg/l, aufweist.

7. Wärmedämmplatte nach einem der vorangehenden Ansprüche, **dadurch gekennzeichnet, dass** die Polymere für die geschäumten Polymermaterialien der ersten Dämmschicht, der zweiten Dämmschicht und/oder der Materiallage ausgewählt sind aus Polysulfonen, Polyätherimiden, Polyetherketonen, Polyurethanen, Polymethylmethacrylaten, Polypropylen, Poly(meth)acrylimiden, Polyimiden, Styrolpolymerisaten und deren Mischungen, wobei Polyurethane und Polystyrol als Styrolpolymerisat bevorzugt sind.

8. Wärmedämmplatte nach einem der vorangehenden Ansprüche, **dadurch gekennzeichnet, dass** das latentwärmespeichernde Material, insbesondere in verkapselter oder mikroverkapselter Form, Wasser, Essigsäure, Salze, Salzhydrate, Paraffine, Fettsäuren oder deren Mischungen umfasst, und/oder dass das Funktionsmaterial mineralische Stoffe, insbesondere in Form von partikulärem Schüttgut, umfasst, vorzugsweise Kalkstein, insbesondere in Granulatform, Schotter, Kies und/oder Splitt.

9. Wärmedämmplatte nach einem der vorangehenden Ansprüche, **dadurch gekennzeichnet, dass** das Funktionsmaterial in partikulärer Form einen mittleren Durchmesser im Bereich von 2 bis 10 mm aufweist.

10. Dämmsystem, umfassend mindestens eine Wärmedämmplatte nach einem der vorangehenden Ansprüche und benachbart zur ersten Oberfläche bzw. Frontseite oder hierauf an- bzw. aufliegend eine Außenschicht, insbesondere erste bzw. Außenputzschicht, und/oder benachbart zur zweiten Oberfläche bzw. Rückseite oder hierauf an- bzw. aufliegend eine Innenschicht, insbesondere zweite bzw. Innenputzschicht.

11. Dämmsystem nach Anspruch 10, **dadurch gekennzeichnet, dass** die erste bzw. Außenputzschicht eine Porosität kleiner 50 %, vorzugsweise kleiner 45 % und bevorzugt kleiner 35 % aufweist.

12. Verfahren zur Herstellung einer Wärmedämmplatte nach einem der Ansprüche 1 bis 9, umfassend die Schritte:
Zurverfügungstellung der ersten und zweiten Dämmschicht sowie der Wärmespeicherschicht,
Verbinden der ersten Dämmschicht mit der Wärmespeicherschicht an der der zweiten Oberfläche gegenüberliegenden Seite und Verbinden der Wärmespeicherschicht auf der der ersten Dämmschicht gegenüberliegenden Seite mit der zweiten Dämmschicht an der der ersten Oberfläche gegenüberliegenden Seite oder
Verbinden der zweiten Dämmschicht mit der Wärmespeicherschicht an der der ersten Oberfläche gegenüberliegenden Seite und Verbinden der Wärmespeicherschicht auf der der zweiten Dämmschicht gegenüberliegenden Seite mit der ersten Dämmschicht an der der zweiten Oberfläche gegenüberliegenden Seite;
oder umfassend die Schritte:
Zurverfügungstellung einer ersten und zweiten Dämmschicht,
vorzugsweise im Wesentlichen vertikales Ausrichten der ersten Dämmschicht,
Aufbringen oder Auflegen von partikulärem Funktionsmaterial und/oder latentwärmespeicherndem Material, insbesondere in verkapselter oder mikroverkapselter Form, das vorzugsweise über eine höhere Festigkeit als die erste Dämmschicht verfügt,
teilweises oder vollständiges Einbringen, insbesondere Eindrücken bzw. Einpressen, des Funktionsmaterials und/oder des latentwärmespeichernden Materials in die erste Dämmschicht unter Ausbildung der Wärmespeicherschicht,
Abdecken des eingebrachten, insbesondere eingepressten bzw. eingedrückten,
Funktionsmaterials mit der zweiten Dämmschicht und Verbinden derselben mit der ersten Dämmschicht;
oder umfassend die Schritte:
Zurverfügungstellung der ersten und zweiten Dämmschicht sowie der Materiallage enthaltend Perforation und/oder Einlässe,
vollständiges oder teilweises Befüllen der Perforationen und/oder Einlässe mit dem Funktionsmaterial und/oder dem latentwärmespeichernden Material,
Verbinden der befüllten Materiallage mit der ersten Dämmschicht sowie auf der gegenüberliegenden Seite mit der zweiten Dämmschicht.

13. Verfahren nach Anspruch 12, **dadurch gekennzeichnet, dass** die Perforationen und/oder Einlässe enthaltende Materiallage zunächst mit der ersten Dämmschicht verbunden und anschließend die Perforation und/oder Einlässe mit dem Funktionsmaterial und/oder dem latentwärmespeichernden Material befüllt werden.

14. Verfahren zur Herstellung von Wärmedämmplatten, insbesondere von Wärmedämmplatten nach einem der Ansprüche 1 bis 9, **dadurch gekennzeichnet, dass** die Fertigung im Bandverfahren erfolgt und die Platten direkt hinter der Kaschierung einseitig hoch wärmekapazitives, insbesondere Funktionsmaterial, oder latentwärmespeicherndes Material bzw. eine Kombination daraus enthalten.

15. Verfahren nach Anspruch 14, **dadurch gekennzeichnet, dass** das Material bzw. Funktionsmaterial und/oder das latentwärmespeichernde Material, insbesondere kurz, vor dem Schäumprozess auf die untere Bahn aufgebracht wird und/oder vor dem Schäumprozess zusätzlich fixiert wird.

16. Verfahren nach einem der Ansprüche 12 bis 15, **dadurch gekennzeichnet, dass** das Funktionsmaterial eine spezifische Wärmekapazität von mehr als 0,5 kJ/(kg K), bevorzugt von mehr als 0,7 kJ/(kg K) aufweist.

17. Verfahren nach einem der Ansprüche 12 bis 16, **dadurch gekennzeichnet, dass** das Material, insbesondere Funktionsmaterial, in Form eines Granulats, einer Paste und/oder einer zusätzlichen Bahn aufgebracht wird oder dass statt des Aufbringens von Granulat, Paste oder Bahn eine bereits mit dem Material vorbereitete Kaschierung zum Einsatz kommt und/oder dass das Material, insbesondere Funktionsmaterial, und/oder das latentwärmespeichernde Material, in Mustern aufgebracht wird, die einen Zuschnitt der Wärmedämmplatten mit üblichen Werkzeugen ermöglichen, ohne das Material zu beschädigen oder selbst beschädigt zu werden.

18. Verwendung der Wärmedämmplatten nach einem der Ansprüche 1 bis 9 oder der Dämmsysteme nach Anspruch 10 oder 11 für Außenfassaden oder Bestandteile hiervon.
